# EUROPEAN PATENT SPECIFICATION

(11) **EP 3 141 951 B1**
(45) Date of publication and mention of the grant of the patent: **17.10.2018**
(21) Application number: 15777211.2
(22) Date of filing: 16.02.2015
(51) Int. Cl.: G03B 21/16, F21S 2/00, G03B 21/14, G03B 21/20, H04N 5/74, F21V 29/51, F21V 29/74, F21Y 115/30, F21V 29/67, F28D 15/02

(54) **LIGHT SOURCE DEVICE AND IMAGE DISPLAY DEVICE**
LICHTQUELLENVORRICHTUNG UND BILDANZEIGEVORRICHTUNG
DISPOSITIF FORMANT SOURCE DE LUMIÈRE ET DISPOSITIF D'AFFICHAGE D'IMAGE

(30) Priority: 08.04.2014 JP 2014079452
(43) Date of publication of application: 15.03.2017
(73) Proprietor: Sony Corporation, Tokyo 108-0075 (JP)
(72) Inventor: TERASAKI, Kazuya, Tokyo 108-0075 (JP)
(74) Representative: D Young & Co LLP
(86) International application number: PCT/JP2015/000690
(87) International publication number: WO 2015/155917

(56) References cited:
- WO-A1-2012/164409
- WO-A1-2012/164409
- CN-A- 101 995 747
- JP-A- 2002 184 234
- JP-A- 2009 181 098
- JP-A- 2012 203 350
- JP-A- 2012 203 350
- US-A1- 2010 053 567
- US-A1- 2011 157 560
- US-B2- 7 967 475

## Description

### Technical Field

The present technology relates to a light source apparatus and an image display apparatus using the same.

### Background Art

Conventionally, apparatuses for displaying images such as a projector and a display apparatus have been widely used. For example, light from a light source is modulated by a light modulator such as a liquid-crystal device and the modulated light is displayed on a screen or a display surface. It is important for such an image display apparatus to cope with heat generated from the light source.

Patent Document 1 has disclosed a technique for coping with heat of a backlight unit of an LED (Light Emitting Diode) type that is applicable to a liquid-crystal display apparatus. As shown in Fig. 2 and the like of Patent Document 1, the backlight unit includes a light source substrate 14, a base member 17, and a heat pipe 18. On the light source substrate 14, light sources 30 are mounted. The light source substrate 14 is mounted on the base member 17 and the base member 17 is fixed to a housing back panel 16 of member 17. Heat generated by the light sources 30 is transmitted via the base member 17 to the heat pipe 18. The heat pipe 18 is mounted utilizing the steps of grooves 22 formed in the base member 17 (paragraphs [0030]-[0032], etc. in Patent Document 1).

With this configuration, heat generated by light emission of the light sources 30 of the light source substrate 14 is transmitted to the heat pipe 18 through the base member 17. The heat is transmitted from a center portion of the heat pipe 18 which is particularly at a high temperature to peripheral portions. As a result, temperature equalization of the entire backlight unit is realized (paragraphs [0011], [0056], etc. in Patent Document 1).

Patent Document 1: Japanese Patent Application Laid-open No. 2008-170729

A further previously proposed arrangement is disclosed in WO 2012/164409 Another conventional arrangement is disclosed in US 2011/0157560 A1.

### Summary of Invention

### Problem to be solved by the Invention

More and more products use, as the light sources of the image display apparatus, solid-state light sources, for example, the above-mentioned LEDs or LDs (Laser Diodes), not mercury-vapor lamps or xenon lamps. The solid-state light sources such as the LEDs have a long duration, and hence it is unnecessary to exchange the lamps unlike conventional cases. Further,
they are advantageous in that they emit light immediately after powered on.

In the image display apparatus using the solid-state light sources, for displaying an image at a high luminance, it is necessary to enhance the luminance of the solid-state light sources themselves by increasing the number of solid-state light sources to be used, for example. In this case, heat generated from the solid-state light sources is increased, and hence a technique for effectively reducing such heat is required.

In view of the above-mentioned circumstances, it is an object of the present technology to provide a light source apparatus and an image display apparatus that are capable of effectively cooling a light source section.

### Means for solving the Problem

In order to achieve the above-mentioned object, a light source apparatus according to an embodiment of the present technology is defined in independent claim 1 and includes a light source section and a heat dissipation section.

The light source section includes a plurality of light source units.

The heat dissipation section includes
one or more fins commonly thermally connected to the plurality of light source units,
a first mounting portion on which a suction mechanism that sucks heated air through the one or more fins is mounted, and
a second mounting portion on an opposite side of the first mounting portion, on which the light source section is mounted, the second mounting portion including a first intake port serving as an intake port for cooling air guided to the one or more fins.

In this light source apparatus, the one or more fins are commonly thermally connected to the plurality of light source units of the light source section. Further, the light source section is mounted on the second mounting portion on the opposite side of the first mounting portion on which the suction mechanism is mounted. The first intake port is disposed on the second mounting portion and the cooling air is guided to the one or more fins via this first intake port. With this, it becomes possible to effectively cool the plurality of light source units of the light source section.

The heat dissipation section may include a second intake port between the first and second mounting portions.

The cooling air is also taken in through the second intake port, and hence it becomes possible to effectively cool the plurality of light source units.

The one or more fins may include a plurality of fins each having a rectangular planar plate shape and superimposed such that peripheral edges are aligned. In this case, the first mounting portion may be disposed on a first surface in which first edge portions of the plurality of fins are aligned. Further, the second mounting portion may be disposed on a second surface opposed to the first surface, in which second edge portions opposed to the first edge portions of the plurality of fins are aligned.

With this, the cooling air flows from the first intake port toward the first mounting portion. As a result, it becomes possible to effectively cool the plurality of light source units.

The second intake port may be provided in each of third surfaces opposed to each other between the first and second surfaces, in which third edge portions of each of the plurality of fins are aligned, the third edge portions being opposed to each other between the first and second edge portions.

With this, in the direction in which they are opposed to each other, the cooling air is sucked in a direction crossing a channel for the cooling air flowing through the first intake port. With this, it becomes possible to effectively cool the plurality of light source units.

The light source apparatus may further include a heat transport section including
a first connection thermally connected to the plurality of light source units, and
a second connection thermally connected to the one or more fins, the heat transport section being capable of transporting heat from the first connection to the second connection.

With the heat transport section, it becomes possible to effectively conduct generated heat from the plurality of light source units to the fins. As a result, it becomes possible to effectively cool the plurality of light source units.

The heat transport section may include a heat pipe.

It is possible to effectively conduct heat by the use of the heat pipe.

Each of the plurality of light source units may include one or more light sources that emit light with a direction extending from the first surface toward the second surface being an emitting direction.

With this, the light source unit is mounted on the second mounting portion on the opposite side (so-called back side) of the light-emitting side. Further, the cooling air is sucked into the first intake port from the light-emitting side (so-called front side). As a result, it becomes possible to effectively cool the plurality of light source units.

The light source section may set the same direction as the emitting direction of the one or more light sources, as an optical axis direction.

With this, the heat dissipation section is mounted on a so-called back side of the light source section, and hence effective cooling becomes possible.

The one or more light sources may be solid-state light sources.

In accordance with the present technology, it is possible to effectively cool the solid-state light source. As a result, it is possible to increase the luminance of the light source apparatus.

The suction mechanism may include a fan.

The cooling air can be effectively sucked by the fan.

An image display apparatus according to an embodiment of the present technology is defined in independent claim 9 and includes a light source apparatus, an image generation system, and a projection system.

The light source apparatus includes
a light source section including a plurality of light source units,
a suction mechanism that sucks the air, and
a heat dissipation section including
one or more fins commonly thermally connected to the plurality of light source units,
a first mounting portion on which the suction mechanism is mounted such that heated air is capable of being sucked by the one or more fins, and
a second mounting portion on an opposite side of the first mounting portion, on which the light source section is mounted, the second mounting portion including a first intake port serving as an intake port for cooling air guided to the one or more fins.

The image generation system includes
an image generation element that generates an image on the basis of irradiated light, and
an illumination optical system that irradiates the image generation element with light from the light source apparatus.

The projection system projects the image generated by the image generation element.

### Effects of the Invention

As described above, in accordance with the present technology, it becomes possible to effectively cool the light source section. It should be noted that the effect described here is not necessarily limitative and may be any effect described in the present disclosure.

### Brief Description of Drawings

[Fig. 1] A schematic diagram showing a configuration example of an image display apparatus according to an embodiment.
[Fig. 2] A schematic diagram showing configuration examples of an image generation system and a projection system.
[Fig. 3] A perspective view showing a configuration example of a light source apparatus.
[Fig. 4] A diagram of a state in which an upper surface portion of a light source section is detached.
[Fig. 5] A plan view of the light source section shown in Fig. 4 as viewed from the top.
[Fig. 6] A schematic view for explaining generation of the white light by the light source section.
[Fig. 7] A perspective view showing a configuration example of a light collection unit.
[Fig. 8] A plan view of the light collection unit shown in Fig. 7 as viewed from the top.
[Fig. 9] A plan view of the light source apparatus shown in Fig. 3 as viewed from the top.
[Fig. 10] A perspective view showing a configuration example of a heat dissipation section.
[Fig. 11] A side view of the heat dissipation section as viewed from the side.
[Fig. 12] A schematic diagram showing configuration examples of light source apparatuses according to other embodiments.
[Fig. 13] A schematic view showing another configuration example of a plurality of light source units.

### Mode(s) for Carrying Out the Invention

Hereinafter, embodiments according to the present technology will be described with reference to the drawings.

### [Image Display Apparatus]

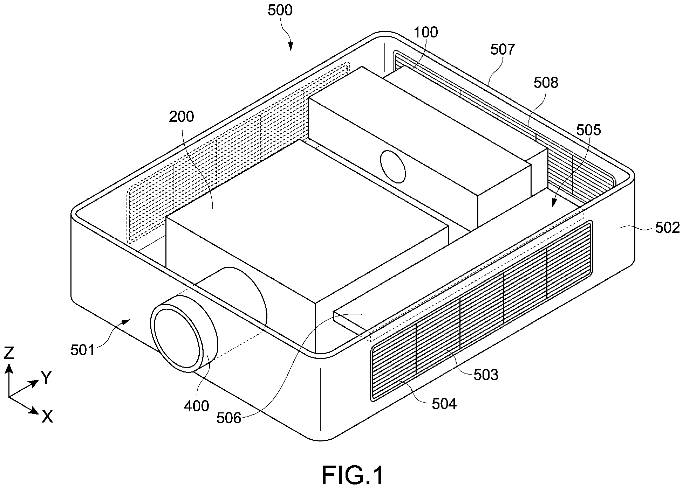

Fig. 1 is a schematic diagram showing a configuration example of an image display apparatus according to an embodiment of the present technology. An image display apparatus 500 is used as a projector for presentation or digital cinema, for example. The present technology described below is also applicable to image display apparatuses used for the other purposes.

The image display apparatus 500 includes a light source apparatus 100, an image generator system 200, and a projection system 400. The light source apparatus 100 is capable of emitting light. The image generator system 200 generates an image, using light from the light source apparatus 100. The projection system 400 projects the image generated by the image generation system 200 to a screen (not shown) or the like. Further, the image display apparatus 500 includes a housing section 501 surrounding the light source apparatus 100, the image generation system 200, and the projection system 400.

The housing section 501 has an approximately rectangular parallelepiped shape. Two side surface portions 502 are opposed to each other in left- and right-hand directions (x-axis direction) orthogonal to front and rear directions (y-axis direction). In at least one of the side surface portions 502, an intake port 503 for sucking the external air is formed. In the intake port 503, a plurality of tilted blades 504 like a lean-to roof are formed for preventing foreign substances from entering it. In a back portion 507 located on a back side of the light source apparatus 100, a discharge port 508 capable of discharging the heated air is formed. Note that, in Fig. 1, the illustration of an upper surface portion of the housing section 501 is omitted.

A feeder section 505 is disposed at a position opposed to the intake port 503 formed in the side surface portion 502. The feeder section 505 feeds the external air into the housing section 501. The feeder section 505 includes a filter 506 and a fan mechanism (not shown) disposed below the filter 506. When the fan mechanism is driven, the external air sucked from the intake port 503 is blown to the light source apparatus 100 and the image generation system 200 via the filter 506. Thus, the respective devices are cooled.

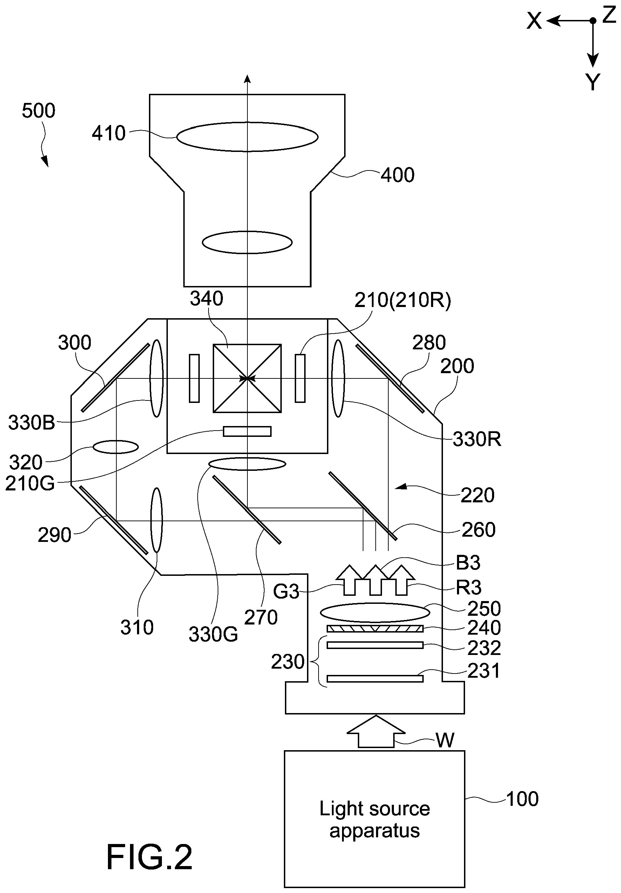

Fig. 2 is a schematic diagram showing configuration examples of the image generation system 200 and the projection system 400. The image generation system 200 generates an image on the basis of white light W including red light, green light, and blue light that are emitted from the light source apparatus 100. The image generator 200 includes an image generation element 210 that generates an image on the basis of the emitted light and an illumination optical system 220 that radiates the light emitted from the light source apparatus 100 to the image generation element 210. Further, the image generation system 200 includes an integrator element 230, a polarization conversion element 240, and a light collection lens 250.

The integrator element 230 includes a first fly eye lens 231 including a plurality of micro lenses two-dimensionally arranged and a second fly eye lens 232 including a plurality of micro lenses arranged corresponding to the micro lenses one by one.

The white light W entering the integrator element 230 from the light source apparatus 100 is divided by the micro lenses of the first fly eye lens 231 into a plurality of light fluxes and forms an image on each of the corresponding micro lenses in the second fly eye lens 232. Each of the micro lenses of the second fly eye lens 232 functions as a secondary light source. A plurality of parallel light beams having the same luminance are emitted to the polarization conversion element 240 as incident light.

The integrator element 230 functions, as a whole, to adjust the incident light, which is emitted from the light source apparatus 100 to the polarization conversion element 240, to have uniform luminance distribution.

The polarization conversion element 240 functions to equalize polarization states of the incident light entering via the integrator element 230 and the like. This polarization conversion element 240 emits white light including blue light B3, green light G3, and red light R3 via, for example, the light collection lens 250 or the like disposed on an emitting side of the light source apparatus 100.

The illumination optical system 220 includes dichroic mirrors 260 and 270, mirrors 280, 290, and 300, relay lenses 310 and 320, field lenses 330R, 330G, and 330B, liquid-crystal light bulbs 210R, 210G, and 210B as the image generation elements, and a dichroic prism 340.

The dichroic mirrors 260 and 270 have characteristics to selectively reflect color light having a predetermined wavelength region and allow light having other wavelength regions to pass therethrough. Referring to Fig. 2, for example, the dichroic mirror 260 selectively reflects the green light G3 and the blue light B3. The dichroic mirror 270 selectively reflects the green light G3 out of the green light G3 and the blue light B3 that are reflected by the dichroic mirror 260. The remaining blue light B3 passes through the dichroic mirror 270. With this, the light emitted from the light source apparatus 100 is separated into the plurality of different color light beams. Note that a configuration for separating the plurality of color light beams, a device to be used, and the like are not limited.

The separated red light R3 is reflected by a mirror 280, and then passes through a field lens 330R to thereby be parallelized. After that, such red light R3 enters a liquid-crystal light bulb 210R for modulation of the red light. The green light G3 passes through a field lens 330G to thereby be parallelized. After that, such green light G3 enters a liquid-crystal light bulb 210G for modulation of the green light. The blue light B3 is reflected by a mirror 290 through a relay lens 310 and further reflected by a mirror 300 through a relay lens 320. The blue light B3 reflected by the mirror 300 passes through a field lens 330B to thereby be parallelized. After that, such blue light B3 enters a liquid-crystal light bulb 210B for modulation of the blue light.

The liquid-crystal light bulbs 210R, 210G, and 210B are electrically connected to a signal source (not shown) (e.g., PC) that supplies an image signal including image information. The liquid-crystal light bulbs 210R, 210G, and 210B modulate, on the basis of the supplied color image signals, the incident light to generate a red image, a green image, a blue image, respectively. The modulated color light beams (formed images) enter the dichroic prism 340 and are combined. The dichroic prism 340 superimposes and combines the color light beams entering in the three directions and emits them toward the projection system 400.

The projection system 400 projects the image generated by the image generation element 210. The projection system 400 includes a plurality of lenses 410 and the like and irradiates a screen (not shown) or the like with the light combined by the dichroic prism 340. Thus, a full-color image is displayed.

### [Light Source Apparatus]

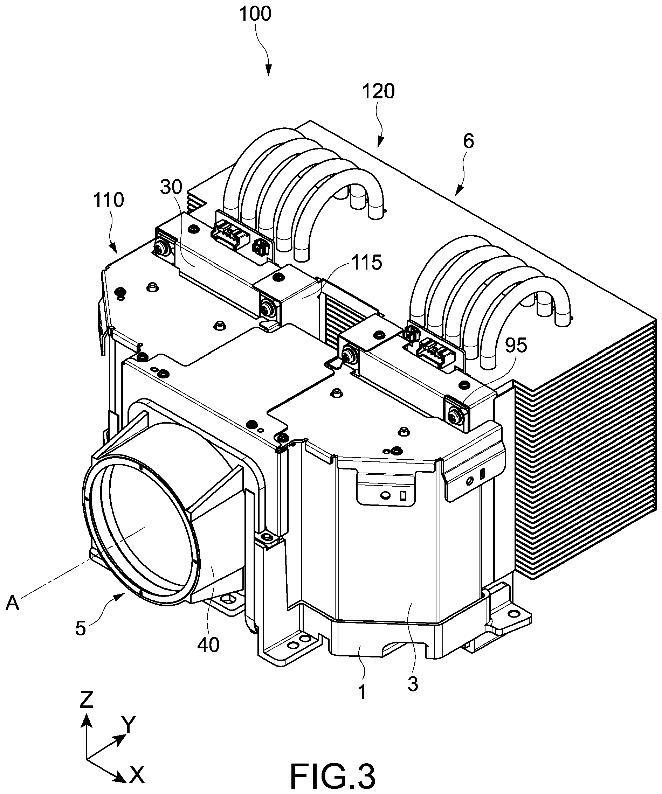

Fig. 3 is a perspective view showing a configuration example of the light source apparatus 100. The light source apparatus 100 includes a light source section 110 that emits the white light and a heat dissipation section 120 mounted on the light source section 110. The light source section 110 combines laser light in the blue wavelength region and light in the red wavelength region to the green wavelength region that is generated from a fluorescent substance excited by the laser light and emits the white light.

The light source section 110 includes a base section 1 provided in the bottom portion and a housing portion 3 supported by the base portion 1. On the base portion 1, a light source unit 30 including one or more solid-state light sources and a fluorescent material unit 40 that receives light of the light source unit 30 and generates and emits the white light are mounted.

The base portion 1 has a planar shape and also has a shape long in one direction. A longitudinal direction of the elongated base portion 1 is left- and right-hand directions (x-axis direction) of the light source apparatus 100 and a lateral direction orthogonal to the longitudinal direction is the front and rear directions (y-axis direction). Therefore, one of two longitudinal portions opposed to each other in the lateral direction is a front side 5 and the other is a back side 6. Further, a direction orthogonal to both of the longitudinal direction and the lateral direction is a height direction (z-direction) of the light source apparatus 100.

As shown in Fig. 3, an optical axis A of the white light is set to extend along the front and rear directions of the light source apparatus 100. Therefore, the white light is emitted toward the front side 5 of the light source section 110. The heat dissipation section 120 is mounted on the back side 6 of the light source section 110 that is an opposite side of a side on which the white light is emitted.

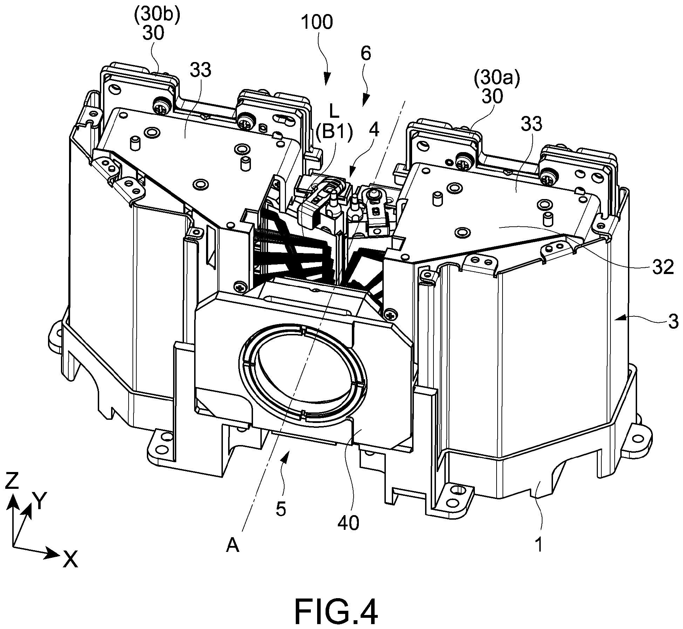

Referring to Figs. 4 to 8, the internal configuration of the light source section 110 and generation of the white light will be described. As Figs. 4, 5, 7, and 8, diagrams showing a light source section 110' according to another embodiment are used. However, for description of the internal configuration and generation of the white light, the following description is applicable as it is. Note that, in comparison with the light source section 110 shown in Fig. 3, an outer appearance of the fluorescent material unit 40 has a shape different from that of a portion supporting a mounting substrate on which the plurality of laser light sources are mounted.

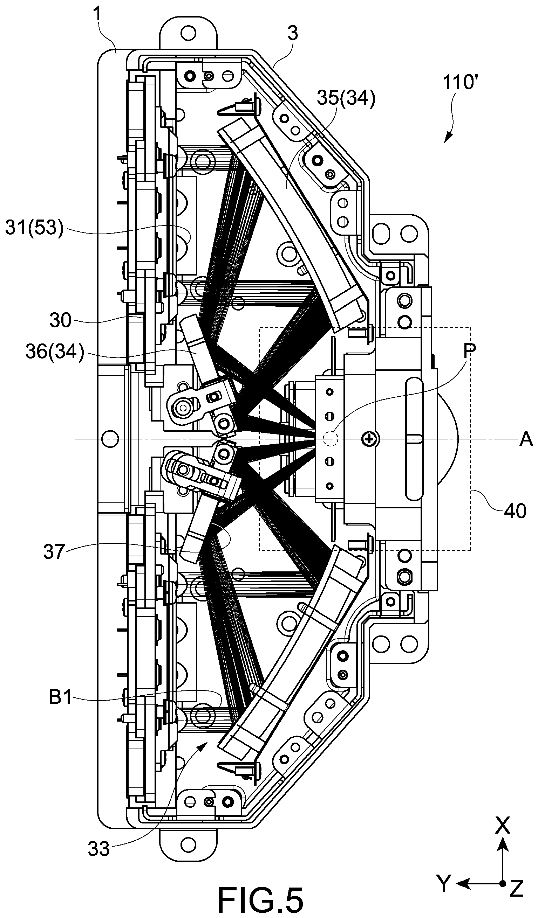

Fig. 4 is a diagram of a state in which the upper surface portion of the light source section 110' is detached. On the back side 6 of the base portion 1, two light source units 30 are arranged in the longitudinal direction. The light source unit 30 includes, as one or more solid-state light sources, a plurality of laser light sources (laser diodes) 31 capable of emitting blue laser light B1 (see Fig. 5). The plurality of laser light sources 31 are arranged such that, with the front and rear directions being an optical axis direction, the blue laser light B1 is emitted toward the front side 5 along that direction.

In front of the two light source units 30, light collection optical systems are arranged. The light collection optical system collects the blue laser light B1 from the plurality of laser light sources 31 onto a predetermined point of the fluorescent material unit 40. In Fig. 4, a supporting portion 32 is shown in front of the light source unit 30. The supporting portion 32 is a member that supports the light source unit 30 and the light collection optical system as a single unit. By this supporting portion 32, a light collection unit 33 including the light source unit 30 and the light collection optical system is configured.

With the blue laser light B1 collected by this light collection unit 33 being excited light, the white light is emitted from the fluorescent material unit 40 along the optical axis A. The direction of the optical axis A of the white light is set as the same direction as the optical axis direction of the blue laser light B1 from the plurality of laser light sources 31. That is, the fluorescent material unit 40 is disposed on the front side 5 of the base portion 1 such that the white light is emitted in the same direction as the optical axis direction of the blue laser light B1.

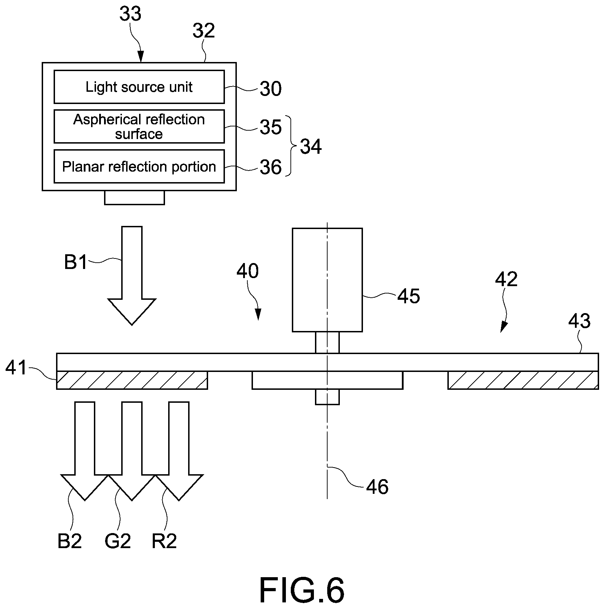

Fig. 5 is a plan view of the light source section 110' shown in Fig. 4 as viewed from the top. In Fig. 5, the illustration of the supporting portion 32 is omitted. Fig. 6 is a schematic view for explaining generation of the white light by the light source section 110'.

The plurality of laser light sources 31 of the light source unit 30 are blue laser light sources capable of oscillating the blue laser light B1 having a peak wavelength as light emission intensity in a wavelength range of from 400 nm to 500 nm, for example. As the solid-state light sources, other light sources such as LEDs may be used. Further, if the solid-state light sources are replaced by other light sources such as mercury-vapor lamps and xenon lamps, the present technology is also applicable.

A light collection optical system 34 of the light collection unit 33 includes an aspherical reflection surface 35 and a planar reflection portion 36. The aspherical reflection surface 35 reflects and collects light emitted from the plurality of laser light sources 31. The planar reflection portion 36 reflects light reflected by the aspherical reflection surface 35 to a fluorescent material 41. With this, the blue laser light B1 from the plurality of laser light sources 31 is collected to a predetermined point P on the fluorescent material 41 of the fluorescent material unit 40.

Inside the fluorescent material unit 40, a fluorescent material wheel 42 shown in Fig. 6 is provided. The fluorescent material wheel 42 includes a disk-shaped substrate 43 that transmits the blue laser light B1 therethrough and the fluorescent material layer 41 disposed on the substrate 43. At the center of the substrate 43, a motor 45 that drives the fluorescent material wheel 42 is connected and the fluorescent material wheel 42 is provided to be rotatable with a rotation axis 46 being a center. The rotation axis 46 is located such that the predetermined point P of the fluorescent material layer 41 is positioned at approximately the center (on the optical axis A) of the fluorescent material unit 40.

The fluorescent material layer 41 contains a fluorescent substance that is excited by the blue laser light B1 having a center wavelength in a wavelength range of from about 400 nm to 500 nm and emits fluorescent light. Then, the fluorescent material layer 41 converts a part of the blue laser light B1 emitted by the plurality of laser light sources 31 into light (e.g., yellow light) in a wavelength region of from the red wavelength region to the green wavelength region. As the fluorescent substance of the fluorescent material layer 41, for example, a YAG (Yttrium Aluminum Garnet)-based fluorescent material is used.

Further, the fluorescent material layer 41 absorbs a part of the excited light while transmitting a part of the excited light therethrough, such that the blue laser light B1 emitted from the plurality of laser light sources 31 can also be emitted. With this, light emitted from the fluorescent material layer 41 becomes white light due to the mixture of blue excited light and yellow fluorescent light. The part of the excited light is transmitted in this manner, and hence the fluorescent material layer 41 may contain, for example, filler particles that are light-transmissive particulate substances.

By the substrate 43 being rotated by the motor 45, the laser light sources 31 irradiate the fluorescent material layer 41 with the excited light while relatively moving the irradiation position on the fluorescent material layer 41. With this, the white light including blue laser light B2 that has been transmitted through the fluorescent material layer 41 and a green light G2 and a red light R2 that are the visible light from the fluorescent material layer 41 is emitted to the fluorescent material unit 40.

The configuration of the light source section 110 is not limited. The light source section 110' shown in Fig. 4 and the like may be used. Further, for example, the fluorescent material unit having a configuration different from the configuration shown in Fig. 6 may be used. Alternatively, a configuration in which the fluorescent material unit is not used can also be assumed. A red laser light source that emits red laser light, a green laser light source that emits green laser light, and a blue laser light source that emits blue laser light may be provided and three-color laser light beams of RGB may be combined to generate the white light.

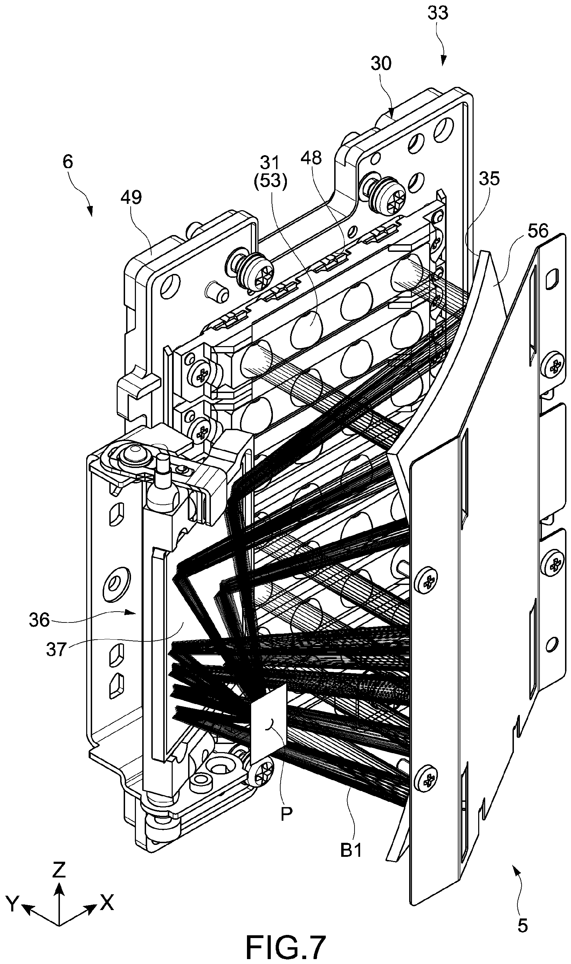

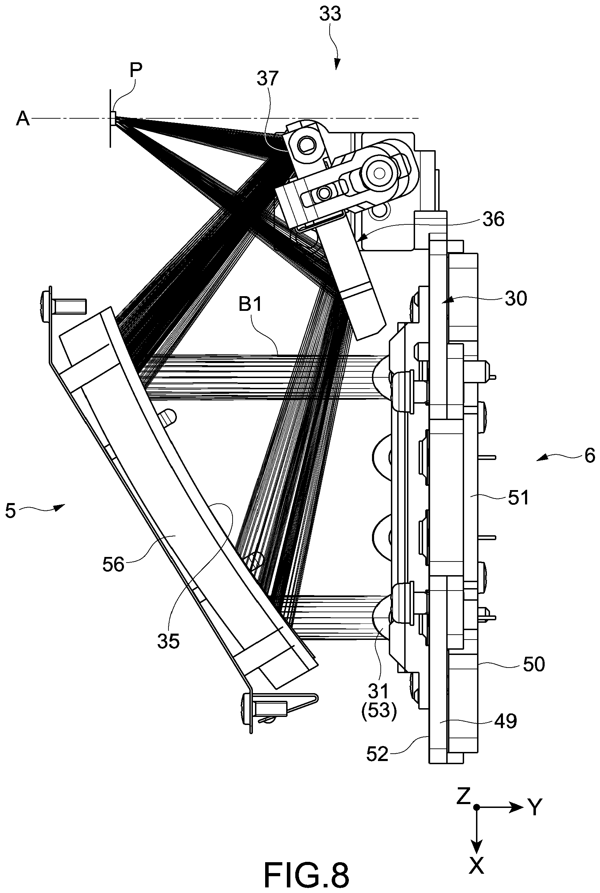

Fig. 7 is a perspective view showing a configuration example of the light collection unit 33. In Fig. 7, the illustration of the supporting portion 32 is omitted. Fig. 8 is a plan view of the light collection unit 33 shown in Fig. 7 as viewed from the top.

In this embodiment, a laser light source array including 28 laser light sources 31 as the light source unit 30 is used. The light source unit 30 includes a plate-like frame 49 in which an opening 48 is formed. On the back surface 50 of the frame 49 (surface on back side 6), a mounting substrate 51 (such as PCB) on which the plurality of laser light sources 31 are mounted is disposed. The plurality of laser light sources 31 emit the blue laser light B1 toward the front side 5 through the opening 48 of the frame 49 along the same direction as the optical axis direction of the optical axis A.

In the front surface 52 of the frame 49 (surface on front side 5), collimator lenses 53 are disposed corresponding to the positions of the plurality of laser light sources 31. The collimator lenses 53 make the blue laser light B1 emitted from the laser light sources 31 approximately parallel light fluxes. Note that the descriptions will be sometimes made with the collimator lenses 53 being shown as the laser light sources 31 in the figure.

The configuration of the light source unit 30 is not limited. For example, the frame 49 does not need to be used. The number and arrangement of laser light sources 31, the configuration of the collimator lenses 53, and the like are also not limited. Note that some light fluxes of the blue laser light B1 emitted from the plurality of laser light sources 31 (collimator lenses 53) are shown in the figure.

On the front side 5 of the plurality of laser light sources 31, a reflection member 56 including the aspherical reflection surface 35 is disposed. The aspherical reflection surface 35 is typically a mirror surface-like concave reflection surface. The shape is designed to be capable of reflecting and collecting the blue laser light B1 from the plurality of laser light sources 31. With this aspherical reflection surface 35, the blue laser light B1 is reflected toward the planar reflection portion 36.

The planar reflection portion 36 includes a planar reflection surface 37 that reflects the blue laser light B1 reflected by the aspherical reflection surface 35 to a predetermined point P on the fluorescent material layer 41. The planar reflection surface 37 is typically a mirror surface. A reflection mirror is used as the planar reflection portion 36, for example.

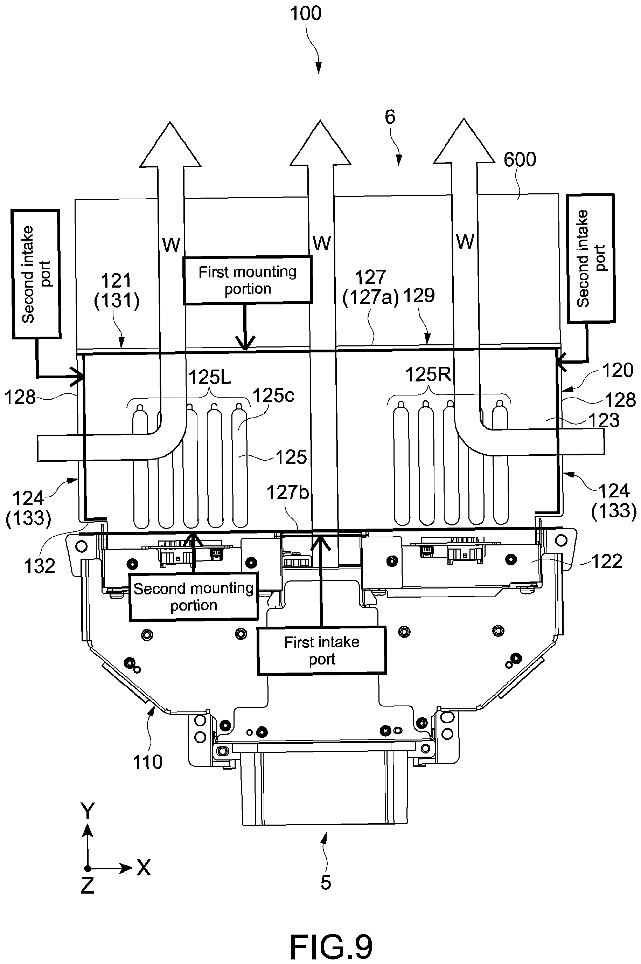

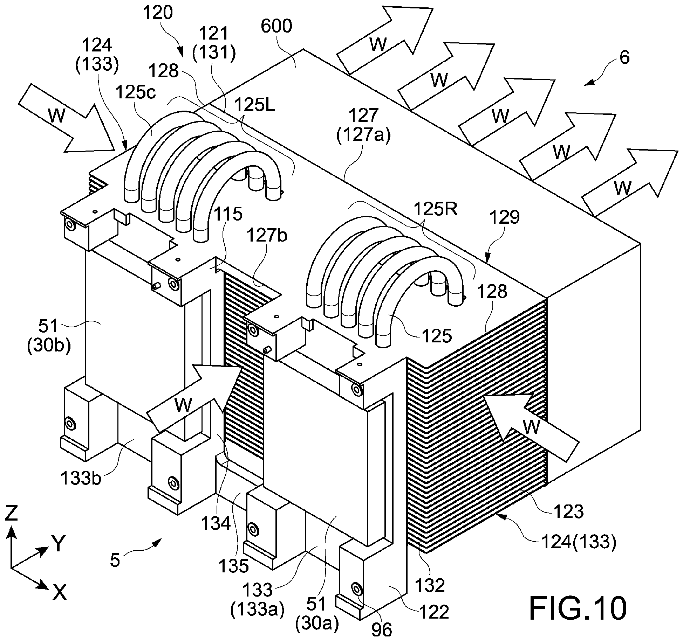

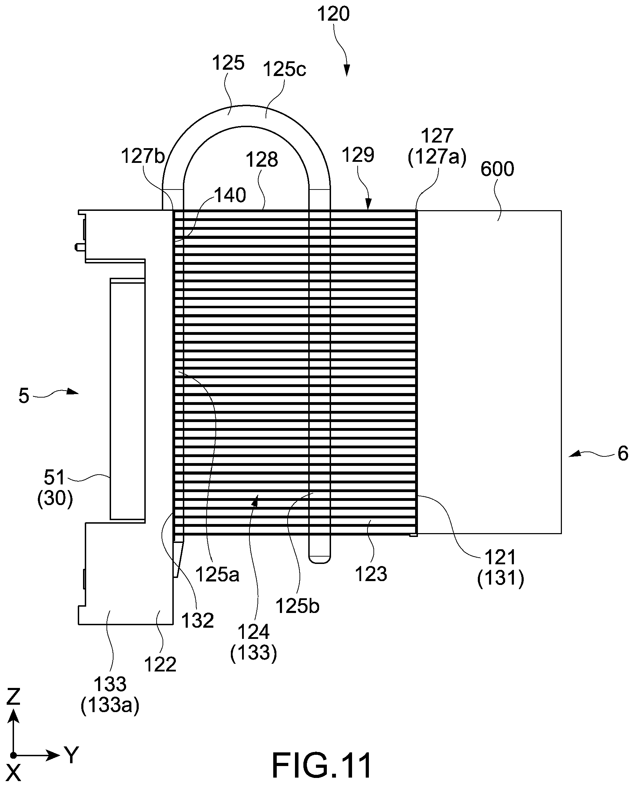

Fig. 9 is a plan view of a light source apparatus 110 as viewed from the top. Fig. 10 is a perspective view showing a configuration example of the heat dissipation section 120. Fig. 11 is a side view of the heat dissipation section 120 as viewed from the side. Figs. 10 and 11 schematically show mounting substrates 51 as heat dissipation targets.

The heat dissipation section 120 includes one or more fins 123 commonly thermally connected to a plurality of light source units 30. Further, the heat dissipation section 120 includes a back portion 121 as a first mounting portion, on which the suction mechanism 600 that sucks heated air through the one or more fins 123 is mounted. Further, the heat dissipation section 120 includes a base 122 as a second mounting portion on the opposite side of the back portion 121, on which the light source section 110 is mounted. As shown in Fig. 9, a first intake port is formed in the base 122. The first intake port serves as an intake port for cooling air W guided to the one or more fins 123.

Further, the heat dissipation section 120 includes two side-surface intake ports 124 and a plurality of heat pipes 125 serving as a heat transport section, which are arranged between the back portion 121 and the base 122. The side-surface intake ports 124 serve as second intake ports into which the cooling air W flows. Note that the cooling air W is the air for cooling the fins 123, the laser light source, and the like. The cooling air W is typically the air taken in through the intake port 503 of Fig. 1. The air cooled by a cooling mechanism (not shown) may be sucked as the cooling air W.

In this embodiment, as the one or more fins 123, a plurality of fins 123 (denoted by the same numerical reference) each having a rectangular planar plate shape are used. Each of the fins 123 includes peripheral edges 129 including two long-side portions and two short-side portions 128. The fins 123 have approximately the same shape as each other. The plurality of fins 123 are superimposed along the height direction such that the peripheral edges 129 are aligned. The fins 123 are arranged at predetermined intervals. Those intervals serve as channels for the cooling air. The number of fins and the magnitude of the intervals are not limited.

As shown in Fig. 10 and 11, the plurality of fins 123 superimposed along the height direction have an approximately rectangular parallelepiped shape as a whole. In this embodiment, a first surface 131 formed by aligning long-side portions 127a on the back side 6 out of the two long-side portions 127 is the back portion 121 serving as the first mounting portion. In this embodiment, the long-side portions 127a correspond to first edge portions of the fins 123.

Note that it is not limited to the case where the first surface 131 itself functions as the first mounting portion and a mechanism or the like for mounting the suction mechanism 600 on the first surface 131 may be provided. In this case, the mechanism or the like serves as the first mounting portion. The specific configuration of this mechanism or the like is not limited.

The suction mechanism 600 typically includes fans. For example, by the fans being mounted on the back portion 121, it becomes possible to suck the cooling air W from the front side 5. Further, also in the left- and right-hand directions, it becomes possible to take in the cooling air W among the superimposed fins 123. Note that a duct or the like may be provided in the back portion 121 and the fans may be arranged in a top end portion of the duct. In this case, this duct is included in the suction mechanism.

In a second surface 132 formed by long-side portions 127b on the front side 5 out of the two long-side portions 127 being aligned, the base 122 serving as the second mounting portion is provided. The second surface 132 is a surface opposed to the first surface 131. Further, in this embodiment, the long-side portions 127b correspond to a second edge portion opposed to the first edge portion of each of the fins 123.

In this embodiment, two third surfaces 133 formed by the two short-side portions 128 being aligned are the two side-surface intake ports 124. The two third surfaces 133 are surfaces opposed to each other between the first and second surfaces 131 and 132. Further, the two short-side portions 128 correspond to the third edge portions opposed to each other between the first and second edge portions. For example, mechanisms or the like for forming the side-surface intake ports 124 of the frame or the like may be provided in the third surfaces 133.

As shown in Fig. 10, the base 122 includes a plurality of contact portions 133, a front-surface intake port 134, and a coupling portion 135. The plurality of contact portions 133 are brought into contact with the plurality of light source units 30, respectively. The front-surface intake port 134 serves as the first intake port serving as the intake port for the cooling air W. The coupling portion 135 couples the plurality of contact portions 133. In this embodiment, a first contact portion 133a and a second contact portion 133b, which the two light source units 30 are respectively brought into contact with, are provided as the plurality of contact portions 133.

The mounting substrate 51 of a right-hand light source unit 30a illustrated in Fig. 4 is brought into contact with the first contact portion 133a. The mounting substrate 51 of the left-hand light source unit 30b is brought into contact with the second contact portion 133b. In some cases, the mounting substrates 51 are not brought into direct contact therewith and members or the like holding them are brought into contact therewith.

A method of maintaining the contact state between the mounting substrates 51 and the contact portions 133 is not limited. For example, as shown in Fig. 3, the light source section 110 and the heat dissipation section 120 are connected to each other such that the mounting substrates 51 are held in contact with the contact portions. Then, the contact state is maintained by fixation with screws 95 or the like at predetermined positions. For example, as shown in Fig. 10, screw holes 96 may be formed at four corners of each contact portion 133 and the screws 95 may be fastened in those screw holes 96.

The front-surface intake port 134 is formed between the first and second contact portions 133a and 133b. The front-surface intake port 134 is formed at a position of approximately the center as the light source apparatus 100 is viewed from the top, the position being a position of approximately the center as the light source apparatus 100 is viewed from the front. Therefore, if the optical axis A of the white light emitted from the fluorescent material unit 40 is extended backward, it passes through the front-surface intake port 127.

As shown in Fig. 3 and the like, an opening 115 is formed at approximately the center on the upper side of the portion in which the light source section 110 and the heat dissipation section 120 are connected to each other. The opening 115 is positioned between the first and second contact portions 133a and 133b on the upper side of the light source section 110. When the suction mechanism 600 is activated, the cooling air W flows into the front-surface intake port 134 through this opening 115.

An opening is formed also on the lower side of the light source section 119. The cooling air W flows also through this opening. At this time, the cooling air W may be sucked into the front-surface intake port 134 by passing through a predetermined channel formed within the light source section 110. With this, it becomes possible to efficiently cool the inside of the light source section 110.

The coupling portion 135 shown in Fig. 10 is used as a reinforcing member for maintaining the flatness of the base 122 on which the light source section 110 is mounted. Without this coupling portion 135, the first and second contact portions 133a and 133b may be connected to the plurality of fins 123, as members separated from each other. In this case, a plurality of bases connected to the plurality of light source units 30 can be considered as being connected to the plurality of fins 123.

As shown in Fig. 11, the long-side portion 127b of each fin 123 is connected to back surfaces 140 of the first and second contact portions 133a and 133b. Each fin 123 is connected over the first and second contact portions 133a and 133b. That is, the two contact portion 133a and 133b are connected to the single fin. With this, each fin 123 is commonly thermally connected to the plurality of light source units 30. Each fin 123 is thermally connected to each of the plurality of light source units 30 via the first and second contact portions 133a and 133b.

The plurality of fins 123 and the first and second contact portions 133a and 133b are typically connected by soldering. Other connection methods may be used.

The contact portions 133 and the plurality of fins 123 are formed of a material having a thermal conductivity, for example, copper. The contact portions 133 and the plurality of fins 123 may be formed of the same material or different materials may be formed.

The plurality of heat pipes 125 functioning as the heat transport section are used in a state in which each of them is folded at approximately the center thereof. Each of the heat pipes 125 includes a first portion 125a that is one end side and a second portion 125b that is the other end side. Each of the heat pipes 125 includes an outer frame portion formed of a material having a high thermal conductivity such as copper, a working fluid such as water filling therein, and a capillary member that acts a capillarity force on the working fluid. The heat pipe 125 is capable of transporting heat between the first and second portions 125a and 125b due to movement of the working fluid. Although the specific configuration of the heat pipe 125 is not limited, a wick type heat pipe is used, for example.

Each heat pipe 125 is provided to penetrate the plurality of fins 123 along the height direction with a folded portion 125c facing upward. Therefore, through-holes into which the heat pipes 125 are inserted are formed at predetermined positions in each of the plurality of fins 123. Further, the positions at which the first and second portions 125a and 125b of the heat pipes 125 are inserted are set along the front and rear directions. That is, as shown in Fig. 11, the first and second portions 125a and 125b are arranged along the front and rear directions. Note that the fins 123 and the heat pipes 125 are fixed to each other via the through-holes by soldering or the like.

As shown in Fig. 10 and the like, a plurality of heat pipes 125R of the plurality of heat pipes 125 are provided on the rear side of the first contact portion 133a. On the other hand, a plurality of heat pipes 125L are provided on the rear side of the second contact portion 133b.

The first portions 125a of the plurality of heat pipes 125R are connected to the back surface 140 of the first contact portion 133a by soldering or the like. With this, the first portions 125a of the heat pipes 125R and the right-hand light source unit 30a are thermally connected to one another. The second portions 125b of the heat pipes 125R are thermally connected to the plurality of fins 123 on the rear side of the portion to which the first portions 125a are connected. Heat is transported from the first portions 125a to the second portions 125b, and hence heat generated from the light source unit 30a can be conducted to the rear side of the fins 123.

On the other hand, the first portions 125 of the plurality of heat pipes 125L are connected to the back surface 140 of the second contact portion 133b by soldering or the like. With this, the first portions 125a of the heat pipes 125L and the left-hand light source unit 30b are thermally connected to each other. The second portions 125b of the heat pipes 125L are thermally connected to the plurality of fins 123 on the rear side of the portion to which the first portions 125a are connected. Heat is transported from the first portions 125a to the second portions 125b, and hence heat generated from the light source unit 30b can be conducted to the rear side of the fins 123.

The first portions 125 of the plurality of heat pipes 125R and the first portions 125a of the plurality of heat pipes 125L are thermally connected to the plurality of light source units 30 and correspond to a first connection of the heat transport section. The second portions 125b of the plurality of heat pipes 125R and the second portions 125b of the plurality of heat pipes 125L correspond to a second connection of the heat transport section, which are thermally connected to the plurality of fins 123. Therefore, heat can be transported from the first connection to the second connection.

The number of heat pipes 125 is not limited. For example, a single heat pipe having a width extending over the back surfaces 140 of the first and second contact portions 133a and 133b may be used.

When the light source apparatus 100 is activated, the blue laser light B1 is emitted from the laser light sources 31 within the light source units 30. Heat generated due to it is guided to the plurality of fins 123 via the base 122 of the heat dissipation section 120. When the suction mechanism 600 is activated, the cooling air W is sucked into the two side-surface intake ports 124, which are located on the rear side of the left- and right-hand light source units 30a and 30b. Further, the cooling air W is sucked into the front-surface intake port 134 formed in the base 122, through the opening 115 in an upper part of the light source section 110.

As described above, in the light source apparatus 100 according to this embodiment,
the one or more fins 123 are commonly thermally connected to the plurality of light source units 30 of the light source section 110. Further, the light source section 110 is mounted on the base 122 on an opposite side of the back portion 121 on which the suction mechanism 600 is mounted. The front-surface intake port 134 is provided in the base 122 and the cooling air W is guided to the one or more fins 123 via this front-surface intake port 134. With this, it becomes possible to effectively cool the plurality of light source units 30 of the light source section 110.

For example, it is assumed that with respect to each of the left- and right hand light source units, a heat sink including a base and one or more fins is provided. That is, it is assumed that the two heat sinks are arranged on the rear side of the light source units. In this case, when the heat sinks have different intake air temperatures, a difference in temperature occurs between the left- and right hand light source units. As a result, a defect such as luminance deterioration first occurs in the light source unit having a higher intake air temperature.

As shown in Fig. 1, the temperature conditions of the left- and right-hand light source units 30 often differ depending on the position of the light source apparatus 100 within the housing section 501. For example, the temperature conditions differ depending on the distance from the intake port 503 that takes in the external air, the channel through which the taken-in external air flows into the light source apparatus 100, and the like. As a result, a defect due to the above-mentioned difference of the intake air temperature between the left- and right-hand light source units 30 occurs.

In the heat dissipation section 120 according to the present technology, the plurality of fins 123 are commonly thermally connected to the left- and right-hand light source units 30a and 30b. As a result, the temperature difference between the left- and right-hand light source units 30a and 30b can be sufficiently suppressed. As a result, it is possible to uniformly cool both of the light source units 30a and 30b and to sufficiently prevent a defect from occurring in the light source unit 30.

Further, the front-surface intake port 134 into which the cooling air W is sucked is formed in the base 122, and hence it is possible to enhance the cooling efficiency of the heat dissipation section 120. In addition, the two side-surface intake ports 124 opposed in the left- and right-hand directions are provided, and hence, in the direction in which they are opposed to each other, it is possible to take in the cooling air W in the direction crossing the channel for the cooling air W flowing through the front-surface intake port 134. As a result, it is possible to further enhance the cooling efficiency.

It is possible to effectively cool the plurality of laser light sources 31, and hence it is possible to increase the number of laser light sources 31 and use the laser light sources 31 having a high luminance. As a result, it is possible to increase the luminance of the light source apparatus 100 and the image display apparatus 500.

According to the inventor's examination, it was found that, when heat sinks were mounted to two light source units and the difference between the intake air temperatures of the left- and right-hand heat sinks was 10°C, the temperature difference between the left- and right hand light source units was about 9°C. In contrast, when the heat dissipation section 120 according to the present technology was used, the temperature difference between the left- and right-hand light source units 30a and 30b was able to be reduced to 1°C. Further, when the front-surface intake port 134 was provided in the base 122 and the cooling air W was taken in through this front-surface intake port 134, the cooling temperature was able to be improved by about 3°C.

In addition, in the heat dissipation section 120 according to the present technology, the plurality of heat pipes 125 were used as the heat transport section. That is, when the heat sink according to the present technology is configured to include the base 122 and the plurality of fins 123, the heat dissipation section 120 can be realized with the configuration in which this heat sink and the heat pipes 125 are combined to each other. With this configuration, it is possible to sufficiently conduct heat uniformly guided from the plurality of light source units 30, to the plurality of fins 123. As a result, irrespective of the attitude of the light source apparatus 100, it is possible to provide sufficient cooling performance. Therefore, it is possible to realize tilt free for the light source apparatus 100 and the image display apparatus 500.

The present inventor measured the temperature change of the light source unit 30 during operation while changing the attitude of the light source apparatus 100, that is, variously changing the optical axis direction in a range of 360°. In this situation, when about 250 Watts of heat was generated during operation, the temperature change was able to be suppressed in a range of from 1°C to 2°C in any attitudes.

In the above, for the sake of easy understanding, the xyz-axis directions are set as the left- and right-hand directions, the front and rear directions, and the upper and lower directions, respectively. However, setting the direction of the optical axis A to a desired direction, the attitude of the light source apparatus 100 may be appropriately changed. That is, the present technology is applicable irrespective of whichever attitude the light source apparatus 100 and the image display apparatus 500 take and the above-mentioned effects can be exerted in the respective attitudes.

Further, in this embodiment, the blue laser light B1 is emitted from the one or more laser light sources 31 with the direction extending from the first surface 131 to the second surface 132 being the emitting direction. Therefore, the heat dissipation section 120 is mounted on the back side of the light source section 110. Further, the cooling air W is sucked into the front-surface intake port 134 from the front side of the light source section 110. As a result, it becomes possible to effectively cool the plurality of light source units 30.

Further, the direction of the optical axis A of the white light emitted from the fluorescent material unit 40 is set in the same direction as the emitting direction of the laser light sources 31. With this, it becomes easy to cope with the blue laser light B1. For example, in the case of assembling the light source apparatus 100 or adjusting the respective members, it is easy to know a forward traveling direction of the blue laser light B1. Therefore, it becomes possible to easily carry out a safety countermeasure such as preventing unexpected irradiation of laser light and the like. Further, by setting the emitting direction of the white light W to the emitting direction of the blue laser light B1, it becomes easy to also carry out a light-shielding countermeasure against leak of light. Further, without causing constraints due to the structure, arrangement, and the like of the image generation system 200, the heat dissipation section 120 can be configured. As a result, it becomes possible to efficiently cool the light source section 110.

### <Other Embodiments>

The present technology is not limited to the above-mentioned embodiments and other various embodiments can be realized.

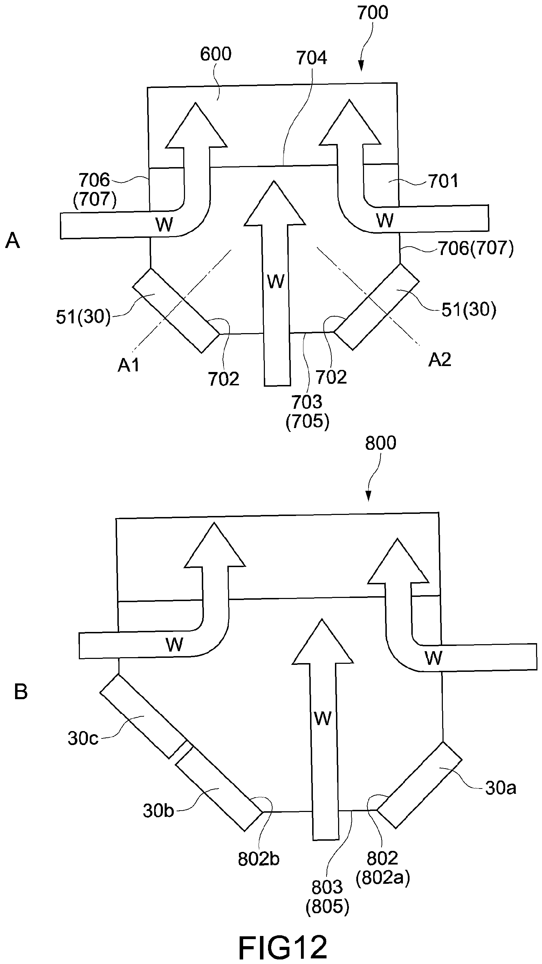

Fig. 12 is a schematic diagram showing other configuration examples of the light source apparatus 100 according to the present technology. For example, in a light source apparatus 700 shown in Fig. 12A, a plurality of fins 701 each having a pentagonal planar shape are used. Then, using an edge portion including two oblique side portions 702 and a short-side portion 703 between them as the first mounting portion, the light source section is mounted on it. A long-side portion 704 on an opposite side of the second edge portion serves as the second mounting portion. The suction mechanism 600 is mounted on it. The mounting substrates 51 of the light source units 30 are brought into contact with the two oblique side portions 702 as the first mounting portion. Further, the short-side portion 703 is a first intake port 705 serving as the intake port of the cooling air W. Further, two side portions 706 of the fins 701 are second intake ports 707.

In this manner, the mounting substrates 51 of the plurality of light source units 30 may be arranged not to be flush with each other. The optical axes A1 and A2 of the laser light sources on the mounting substrates 51 are set along directions crossing each other. Also with such a configuration, it is possible to effectively cool the plurality of light source units 30.

In the light source apparatus 800 shown in Fig. 12B, one light source unit 30a is mounted on one oblique portion 802a of two oblique portions 802 of the first mounting portion (expressed by illustration of mounting substrate). The two light source units 30b and 30c are aligned and mounted on the other oblique portion 802b. The short-side portion 803 between the two oblique portions 802a and 802b serves as a first intake port 805. On the other hand, the intake port is not formed between the two light source units 30b and 30c aligned and arranged in the oblique portion 802b. For example, in this manner, if at least one the first intake port 805 is formed, it becomes possible to exert the above-mentioned effect as the light source apparatus according to the present technology.

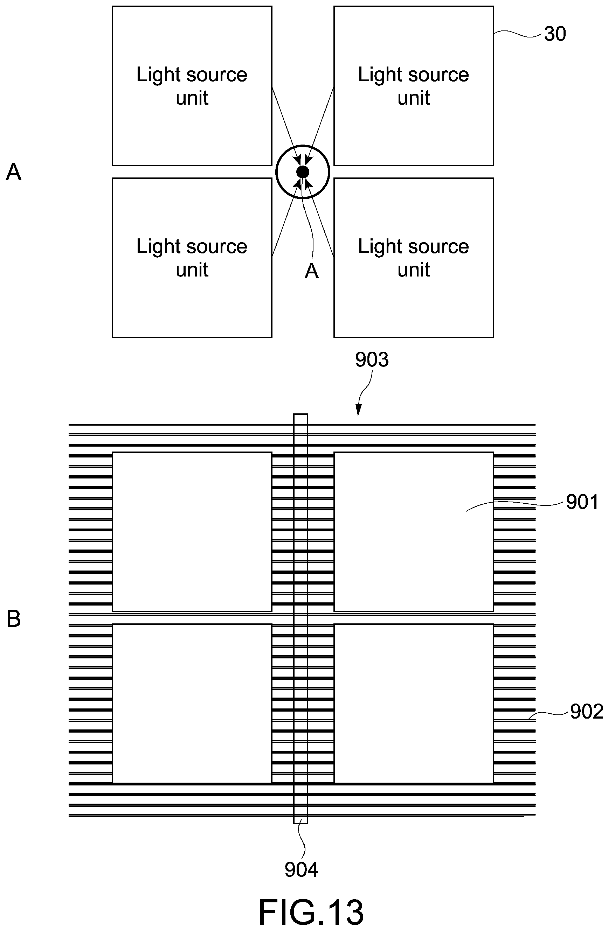

The number of light source units arranged in the light source section is not limited. For example, as shown in Fig. 13, with the optical axis A being a target, a total of four light source units 30 may be arranged such that two of them are aligned in the left- and right-hand directions and the other two are aligned in the upper and lower directions. Even in such a case, as shown in Fig. 13B, it is only necessary to use a heat dissipation section 903 including four contact portions 901 corresponding to the light source units 30b and the one or more fins 902 commonly thermally connected to the four contact portions 901. Note that, in this case, it is only necessary to appropriately use a configuration for commonly thermally connecting the four contact portions 901 to be to the single fin 902. For example, all of the plurality of fins 902 connected to a heat conduction member 904 are used, and hence each of the fins 902 is thermally connected to all of the contact portions 901. This heat conduction member 904 may be the above-mentioned heat transport section. On the other hand, the plurality of fins 902 may include one that is commonly thermally connected only to the two contact portions 901 aligned on the left- and right hand side.

Not limited only to the heat pipe, other device may be used as the heat transport section. Alternatively, a heat transport device different from the heat pipe may be used as the heat transport section.

In the image display apparatus 500 shown in Fig. 2, the illumination optical system 220 configured using the transmissive crystal-liquid panel is described. However, the illumination optical system can also be configured even with a reflective crystal-liquid panel. A digital micromirror device (DMD) or the like may be used as the image generation element. In addition, a Polarizing Beam Splitter (PBS), a color combining prism that combines RGB-color video signals, a TIR (Total Internal Reflection) prism, or the like may be used instead of the dichroic prism 340.

The present technology is applicable also to another image display apparatus, for example, a display apparatus other than the projector. Further, the light source apparatus according to the present technology may be used to an apparatus that is not the image display apparatus.

At least two feature parts of the feature parts of the above-mentioned embodiments can also be combined. That is, the various feature parts described in the embodiments may be arbitrarily combined without distinction of the embodiments. Further, the various effects described above are merely examples and not limitative and other effects may be exerted.

### Description of Symbols

- W: cooling air
- 30: light source unit
- 31: laser light source
- 110: light source section
- 120: heat dissipation section
- 121: back portion
- 122: base
- 123: fin
- 124: side-surface intake port
- 125: heat pipe
- 129: peripheral edge
- 131: first surface
- 132: second surface
- 133: third surface
- 134: front-surface intake port
- 600: suction mechanism

## Claims

1. A light source apparatus (100), comprising:
a light source section (110) including a plurality of light source units (30);
a heat dissipation section (120) including
one or more fins (123) commonly thermally connected to the plurality of light source units,
a first mounting portion (121) on which a suction mechanism (600) that sucks heated air through the one or more fins is mounted,
a second mounting portion (122) on an opposite side of the first mounting portion, on which the light source section is mounted, the second mounting portion including a first intake port (134) serving as an intake port for cooling air guided to the one or more fins, and a second and a third opposed intake ports (124) between the first and second mounting portions, wherein
the one or more fins includes a plurality of fins each having a rectangular planar plate shape with opposed, parallel first and second elongated peripheral edges, and wherein the fins of the plurality of fins are superimposed one to the other so as to have an approximate rectangular parallelepiped shape as a whole,substantially filling the space between the first and the second mounting portions such that the elongated peripheral edges are aligned, the first mounting portion is disposed on a first surface (131) in which the first elongated peripheral edges (127a) of the plurality of fins are aligned, and
the second mounting portion is disposed on a second surface (132) opposed to the first surface, in which the second elongted peripheral edges (127b) opposed to the first elongated peripheral edges of the plurality of fins are aligned.

2. The light source apparatus according to claim 1, wherein
the second and third intake ports are respectively provided with one of a third and fourth surfaces (133) opposed to each other between the first and second surfaces, in which the opposed third and fourth peripheral edges (128) of each of the plurality of fins are aligned, the third and fourth peripheral edges being opposed to each other between the first and second elongated peripheral edges.

3. The light source apparatus according to claim 1, further comprising
a heat transport section (125) including
a first connection (125a) thermally connected to the plurality of light source units, and
a second connection (125b) thermally connected to the one or more fins, the heat transport section being capable of transporting heat from the first connection to the second connection.

4. The light source apparatus according to claim 3, wherein
the heat transport section includes a heat pipe (125) .

5. The light source apparatus according to claim 1, wherein
each of the plurality of light source units includes one or more light sources that emit light with a direction extending from the first surface toward the second surface being an emitting direction.

6. The light source apparatus according to claim 5, wherein
the light source section sets the same direction as the emitting direction of the one or more light sources, as an optical axis direction.

7. The light source apparatus according to claim 1, wherein
the one or more light sources are solid-state light sources.

8. The light source apparatus according to claim 1, wherein
the suction mechanism includes a fan.

9. An image display apparatus, comprising:
(a) a light source apparatus according to claim 1;
(b) an image generation system (200) including
an image generation element (210) that generates an image on the basis of irradiated light, and
an illumination optical system (220) that irradiates the image generation element with light from the light source apparatus; and
(c) a projection system (400) that projects the image generated by the image generation element.

## Patentansprüche

1. Lichtquellenvorrichtung (100), umfassend:
einen Lichtquellenabschnitt (110), der eine Mehrzahl von Lichtquelleneinheiten (30) enthält;
einen Wärmeableitabschnitt (120), enthaltend:
eine oder mehrere Finnen (123), die mit der Mehrzahl von Lichtquelleneinheiten gemeinsam thermisch verbunden sind,
einen ersten Montageteil (121), an dem ein Saugmechanismus (600) montiert ist, der erwärmte Luft durch die eine oder die mehreren Finnen saugt,
einen zweiten Montageteil (122) an einer gegenüberliegenden Seite des ersten Montageteils, an dem der Lichtquellenabschnitt montiert ist, wobei der zweite Montageteil einen ersten Ansauganschluss (134) enthält, der als Ansauganschluss für Kühlluft dient, die zu der einen oder den mehreren Finnen geführt wird, und einen zweiten und einen dritten gegenüberliegenden Ansauganschluss (124) zwischen dem ersten und dem zweiten Montageteil,
wobei die eine oder die mehreren Finnen eine Mehrzahl von Finnen enthält, die jeweils eine rechteckige, ebene Plattenform mit gegenüberliegenden, parallelen ersten und zweiten langgestreckten Umfangskanten aufweisen, und
wobei die Finnen der Mehrzahl von Finnen derart übereinanderliegen, dass sie als Ganzes eine ungefähr rechteckige Parallelepipedform aufweisen, die den Raum zwischen dem ersten und dem zweiten Montageteil im Wesentlichen derart füllt, dass die langgestreckten Umfangskanten gefluchtet sind,
wobei der erste Montageteil an einer ersten Oberfläche (131) angeordnet ist, in der die ersten langgestreckten Umfangskanten (127a) der Mehrzahl von Finnen gefluchtet sind, und
der zweite Montageteil an einer zweiten Oberfläche (132) angeordnet ist, die der ersten Oberfläche gegenüberliegt, in der die zweiten langgestreckten Umfangskanten (127b), die den ersten langgestreckten Umfangskanten der Mehrzahl von Finnen gegenüberliegen, gefluchtet sind.

2. Lichtquellenvorrichtung nach Anspruch 1, wobei der zweite und der dritte Ansauganschluss jeweils mit einer von einer dritten und einer vierten Oberfläche (133) versehen sind, die einander zwischen der ersten und der zweiten Oberfläche gegenüberliegen, wobei die dritte und die ihr gegenüberliegende vierte Umfangskante (128) jeder der Mehrzahl von Finnen gefluchtet sind, wobei die dritte und die vierte Umfangskante einander zwischen der ersten und der zweiten langgestreckten Umfangskante gegenüberliegen.

3. Lichtquellenvorrichtung nach Anspruch 1, ferner umfassend
einen Wärmetransportabschnitt (125), Folgendes enthaltend:
eine erste Verbindung (125a), die mit der Mehrzahl von Lichtquelleneinheiten thermisch verbunden ist, und
eine zweite Verbindung (125b), die mit der einen oder den mehreren Finnen thermisch verbunden ist, wobei der Wärmetransportabschnitt in der Lage ist, Wärme von der ersten Verbindung zu der zweiten Verbindung zu transportieren.

4. Lichtquellenvorrichtung nach Anspruch 3, wobei der Wärmetransportabschnitt ein Wärmerohr (125) enthält.

5. Lichtquellenvorrichtung nach Anspruch 1, wobei jede der Mehrzahl von Lichtquelleneinheiten eine oder mehrere Lichtquellen enthält, die Licht emittieren, wobei eine Richtung, die von der ersten Oberfläche zur zweiten Oberfläche verläuft, eine Emissionsrichtung ist.

6. Lichtquellenvorrichtung nach Anspruch 5, wobei der Lichtquellenabschnitt die gleiche Richtung wie die Emissionsrichtung der einen oder der mehreren Lichtquellen als eine Richtung der optischen Achse einstellt.

7. Lichtquellenvorrichtung nach Anspruch 1, wobei die eine oder die mehreren Lichtquellen Festkörper-Lichtquellen sind.

8. Lichtquellenvorrichtung nach Anspruch 1, wobei der Saugmechanismus ein Gebläse enthält.

9. Bildanzeigevorrichtung, umfassend:
(a) eine Lichtquellenvorrichtung nach Anspruch 1;
(b) ein Bilderzeugungssystem(200), das Folgendes enthält:
ein Bilderzeugungselement (210), das ein Bild auf der Basis ausgestrahlten Lichts erzeugt, und
ein optisches Beleuchtungssystem (220), das das Bilderzeugungselement mit Licht von der Lichtquellenvorrichtung bestrahlt; und
(c) ein Projektionssystem (400), welches das Bild projiziert, das von dem Bilderzeugungselement erzeugt wurde.

## Revendications

1. Appareil de source de lumière (100), comprenant :
une section de source de lumière (110) comprenant une pluralité d'unités de source de lumière (30) ;
une section de dissipation de chaleur (120) comprenant
une ou plusieurs ailettes (123) thermiquement reliées en commun à la pluralité d'unités de source de lumière,
une première partie de montage (121) sur laquelle est monté un mécanisme d'aspiration (600) qui aspire de l'air chauffé à travers la ou les ailettes,
une seconde partie de montage (122) sur un côté opposé de la première partie de montage, sur laquelle la section de source de lumière est montée, la seconde partie de montage comprenant un premier orifice d'admission (134) servant d'orifice d'admission pour l'air de refroidissement guidé vers la ou les ailettes, et un deuxième et un troisième orifices d'admission opposés (124) entre les première et seconde parties de montage,
la ou les ailettes comprenant une pluralité d'ailettes ayant chacune une forme de plaque plane rectangulaire avec des premier et deuxième bords périphériques allongés parallèles, opposés, et les ailettes de la pluralité d'ailettes étant superposées les unes sur les autres de manière à avoir une forme de parallélépipède rectangle approximativement rectangulaire dans son ensemble, remplissant sensiblement l'espace entre les première et seconde parties de montage de telle sorte que les bords périphériques allongés sont alignés, la première partie de montage étant disposée sur une première surface (131) dans laquelle les premiers bords périphériques allongés (127a) de la pluralité d'ailettes sont alignés, et la seconde partie de montage étant disposée sur une seconde surface (132) opposée à la première surface, dans laquelle les deuxièmes bords périphériques allongés (127b) opposés aux premiers bords périphériques allongés de la pluralité d'ailettes sont alignés.

2. Appareil de source de lumière selon la revendication 1, les deuxième et troisième orifices d'admission étant respectivement pourvus d'une troisième et d'une quatrième surface (133) opposées l'une à l'autre entre les première et seconde surfaces, dans lesquelles les troisième et quatrième bords périphériques opposés (128) de chacune de la pluralité d'ailettes sont alignées, les troisième et quatrième bords périphériques étant opposés l'un à l'autre entre les premier et deuxième bords périphériques allongés.

3. Appareil de source de lumière selon la revendication 1, comprenant en outre :
une section de transport de chaleur (125) comprenant
une première connexion (125a) reliée thermiquement à la pluralité d'unités de source de lumière, et
une seconde connexion (125b) thermiquement reliée à la ou aux ailettes, la section de transport de chaleur étant apte à transporter de la chaleur de la première connexion à la seconde connexion.

4. Appareil de source de lumière selon la revendication 3, la section de transport de chaleur comprenant un caloduc (125).

5. Appareil de source de lumière selon la revendication 1,
chacune de la pluralité d'unités de source de lumière comprenant une ou plusieurs sources de lumière qui émettent de la lumière avec une direction s'étendant de la première surface vers la seconde surface, étant une direction d'émission.

6. Appareil de source de lumière selon la revendication 5,
la section de source de lumière définissant la même direction que la direction d'émission de la ou des sources de lumière, en tant que direction d'axe optique.

7. Appareil de source de lumière selon la revendication 1,
la ou les sources de lumière étant des sources de lumière à semi-conducteurs.

8. Appareil de source de lumière selon la revendication 1,
le mécanisme d'aspiration comprenant un ventilateur.

9. Appareil d'affichage d'image, comprenant :
(a) un appareil de source de lumière selon la revendication 1 ;
(b) un système de génération d'image (200) comprenant
un élément de génération d'image (210) qui génère une image sur la base de la lumière irradiée, et
un système optique d'éclairage (220) qui irradie l'élément de génération d'image avec de la lumière provenant de l'appareil de source de lumière ; et
(c) un système de projection (400) qui projette l'image générée par l'élément de génération d'image.
